# EUROPEAN PATENT APPLICATION

(11) **EP 4 756 261 A1**
(43) Date of publication of application: **10.06.2026**
(21) Application number: 24888442.1
(22) Date of filing: 07.10.2024
(51) Int. Cl.: F16H 63/34, B60T 1/06, F16D 63/00, F16H 61/28, H02K 7/116

(54) **UNIT**

(30) Priority: 08.11.2023 JP 2023190686
(71) Applicant: Jatco Ltd., Shizuoka 417-8585 (JP)
(72) Inventor: KOBAYASHI, Kosuke, Fuji-shi, Shizuoka 417-8585 (JP); SHOICHI, Minoru, Fuji-shi, Shizuoka 417-8585 (JP); YAGI, Hidekazu, Fuji-shi, Shizuoka 417-8585 (JP)
(74) Representative: Hoefer & Partner Patentanwälte mbB
(86) International application number: PCT/JP2024/035749
(87) International publication number: WO 2025/100143

(57) **Abstract**

[Problems] An object is to realize a park lock mechanism that contributes to miniaturization in the unit in which the motor and the drive shaft are arranged on separate axes.

[Solutions] The unit includes the motor, the link shaft connected at the downstream side of the motor, and the park lock mechanism having the park gear provided on the shaft, the shaft being configured to rotate integrally with the rotor of the motor, the park pawl that engages with the park gear, and the park actuator that rotates the park pawl. The link shaft is positioned on the outer circumference of the motor. When viewed from the first orthogonal direction orthogonal to the axial direction of the link shaft, the link shaft and the park actuator each have a portion that overlaps with the motor. When viewed from the second orthogonal direction orthogonal to the axial direction and the first orthogonal direction, the park actuator has a portion that overlaps with the link shaft.

## Description

### TECHNICAL FIELD

The present invention relates to a unit.

### BACKGROUND ART

Patent Document 1 discloses that in a unit in which a motor and a drive shaft are arranged coaxially, the motor is arranged between a park lock mechanism and a gear.

### PRIOR ART DOCUMENT

### PATENT DOCUMENT

Patent Document 1: WO 2020/183789A

### SUMMARY OF INVENTION

### PROBLEMS TO BE SOLVED BY THE INVENTION

It is desired that the unit be compact.

The present invention has been made in view of such a problem, and an object thereof is to realize a park lock mechanism that contributes to miniaturization in a unit in which a motor and a drive shaft are arranged on separate axes.

### MEANS FOR SOLVING THE PROBLEM

A unit according to one aspect of the present invention includes: a motor; a link shaft connected at a downstream side of the motor; and a park lock mechanism having a park gear provided on a shaft, the shaft being configured to rotate integrally with a rotor of the motor, a park pawl engaged with the park gear, and a park actuator configured to rotate the park pawl. The link shaft is positioned on an outer circumference of the motor. When viewed from a first orthogonal direction orthogonal to an axial direction of the link shaft, the link shaft and the park actuator each have a portion overlapping with the motor. When viewed from a second orthogonal direction orthogonal to the axial direction and the first orthogonal direction, the park actuator has a portion overlapping with the link shaft.

### EFFECT OF THE INVENTION

According to this aspect, in the unit in which the motor and the drive shaft (the link shaft) are not coaxial but are arranged on separate axes, it is possible to realize a park lock mechanism that contributes to miniaturization of the unit. In other words, since the park actuator is arranged in a region like a step formed by the motor and the drive shaft, the overall size of the unit can be made compact.

### BRIEF DESCRIPTION OF DRAWINGS

[FIG. 1] FIG. 1 is a schematic configuration diagram of a unit according to the present embodiment.
[FIG. 2] FIG. 2 is a perspective view of a main part of the unit.
[FIG. 3] FIG. 3 is a front view of the main part of the unit.
[FIG. 4] FIG. 4 is a diagram showing another main part of the unit.

### DESCRIPTION OF EMBODIMENTS

An embodiment of the present invention will be described below with reference to the attached drawings.

Regarding a term "unit", the unit can also be referred to as, for example, a motor unit (a unit including at least a motor) or a motive force transmission device (a device including at least a motive force transmission mechanism). The motor is a rotating electric machine having an electric motor function and/or a generator function (at least one of the electric motor function or the generator function). The motive force transmission mechanism is, for example, a gear mechanism and/or a differential gear mechanism. The device (unit) including the motor and the motive force transmission mechanism is included in both concepts of a motor unit and a motive force transmission device.

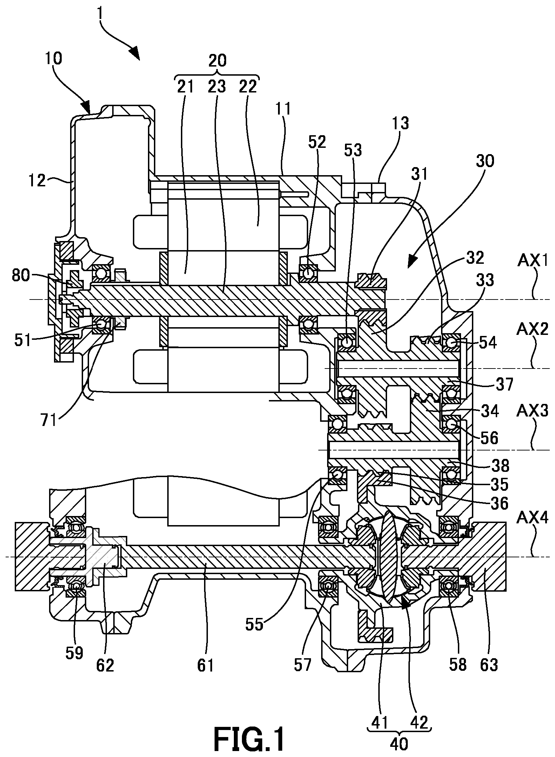

FIG. 1 is a schematic configuration diagram of a unit 1. FIG. 1 is a developed cross-sectional view in which the unit 1 is developed such that a first axis AX1, a second axis AX2, a third axis AX3, and a fourth axis AX4 of the unit 1 are included in the same plane.

The unit 1 is mounted on a vehicle, and the vehicle is an electric vehicle. The unit 1 includes a housing 10, a rotating electric machine 20, a speed reduction mechanism 30, and a differential gear 40. The rotating electric machine 20, the speed reduction mechanism 30, and the differential gear 40 are accommodated in the housing 10. The housing 10 has a first case 11, a second case 12, and a third case 13. Here, the term "housing" is a member that accommodates the motor, gears, and an inverter, and is composed of one or more cases.

The second case 12 closes an opening of the cylindrical first case 11 from one side in the axial direction (the left side in FIG. 1), and the third case 13 closes an opening of the first case 11 from the other side in the axial direction. The rotating electric machine 20 is accommodated in the first case 11, and the differential gear 40 is accommodated in the third case 13.

The rotating electric machine 20 includes a rotor 21, a stator 22, and a rotating shaft 23. The rotor 21 is provided on an outer periphery of the rotating shaft 23. The stator 22 is provided in the first case 11 and accommodates the rotor 21. The rotating shaft 23 is a shaft and projects out from the rotor 21 toward both sides in the axial direction. The rotating shaft 23 is connected at the downstream side of the rotor 21.

Here, phrases "an element B (component, part, etc.) connected to an element A (component, part, etc.)", "an element B (component, part, etc.) connected at the downstream side of an element A (component, part, etc.)", and "an element B (component, part, etc.) connected at the upstream side of an element A (component, part, etc.)" mean that the element A and the element B are connected so as to be capable of transmitting the motive force, with the motive force input side meaning the upstream side and the motive force output side meaning the downstream side. The element A and the element B may be connected via other components, parts, etc. (for example, other clutches, other gear mechanisms, etc.).

The rotating shaft 23 projects out toward the other side in the axial direction from the rotor 21, thereby projecting downstream, and is connected at the downstream side of the rotor 21 at the projecting portion. The rotating shaft 23 is connected at the downstream side of the rotor 21 so as to be capable of transmitting the motive force, and is rotated integrally with the rotor 21.

The rotating shaft 23 penetrates the second case 12 on one side in the axial direction and penetrates the first case 11 on the other side in the axial direction. A bearing 51 is provided in the second case 12 at a portion through which the rotating shaft 23 penetrates, and a bearing 52 is provided in the first case 11 at a portion through which the rotating shaft 23 penetrates. The rotating shaft 23 is supported by the bearing 51 and the bearing 52. A resolver 80 is provided on the rotating shaft 23 at the portion projecting from the second case 12. The resolver 80 detects rotation of the rotating electric machine 20.

A park gear 71 is provided on the rotating shaft 23 at a portion between the bearing 51 and the rotor 21. The park gear 71 is integrated with the rotating shaft 23 and is rotated integrally with the rotating shaft 23.

The speed reduction mechanism 30 is the gear mechanism and includes a first gear 31, a second gear 32, a third gear 33, a fourth gear 34, a fifth gear 35, a sixth gear 36, a shaft 37, and a shaft 38. The first gear 31 is arranged on the first axis AX1 together with the rotating electric machine 20. In other words, the rotating electric machine 20 and the first gear 31 are arranged coaxially with respect to the first axis AX1. That is, a plurality of elements (components, parts, etc.) being arranged on the N-th axis (N is a natural number) is synonymous with the plurality of elements being arranged coaxially with respect to the N-th axis. Similarly, the second gear 32 and the third gear 33 are arranged on the second axis AX2, and the fourth gear 34 and the fifth gear 35 are arranged on the third axis AX3. The sixth gear 36 and the differential gear 40 are arranged on the fourth axis.

The first axis AX1, the second axis AX2, the third axis AX3, and the fourth axis AX4 all constitute axes of the unit 1 and extend along the same direction. Therefore, the extending directions of the first axis AX1, the second axis AX2, the third axis AX3, and the fourth axis AX4 all correspond to the axial direction of the unit 1. In other words, the axial direction means the axial direction of the rotation shaft of components (for example, the motor, the gear mechanism, or the differential gear mechanism) constituting the unit. The radial direction of the unit 1 is a direction orthogonal to any one of the first axis AX1, the second axis AX2, the third axis AX3, and the fourth axis AX4. The first axis AX1 constitutes the axis of the rotating shaft 23, the second axis AX2 constitutes the axis of the shaft 37, the third axis AX3 constitutes the axis of the shaft 38, and the fourth axis AX4 constitutes the axis of the differential gear 40.

The first gear 31 is connected at the downstream side of the rotating shaft 23. The first gear 31 is provided on the rotating shaft 23 on the other side in the axial direction relative to the rotor 21, thereby being connected at the downstream side of the rotating shaft 23. The first gear 31 is connected at the downstream side of the rotating shaft 23 so as to be capable of transmitting the motive force. The first gear 31 is provided on the rotating shaft 23 at the portion projecting from the first case 11. The first gear 31 is press-fitted onto the rotating shaft 23, thereby being integrated with the rotating shaft 23 and being rotated integrally with the rotating shaft 23. The first gear 31 may be connected to the rotating shaft 23 by, for example, spline coupling. The same applies to the second gear 32 and the like.

The second gear 32 meshes with the first gear 31. The second gear 32 is set to have more teeth than the first gear 31 and constitutes a first speed reduction gear stage together with the first gear 31. The second gear 32 is provided on the shaft 37 and is arranged on the second axis AX2. The second gear 32 is integrally formed with the shaft 37. The shaft 37 extends along the rotating shaft 23. The shaft 37 is supported by a bearing 53 provided in the first case 11 and a bearing 54 provided in the third case 13. The bearing 53 and the bearing 54 are arranged at both ends with respect to the shaft 37.

The third gear 33 is connected at the downstream side of the second gear 32. The third gear 33 is provided on the shaft 37 and is arranged on the second axis AX2. The third gear 33 is provided on the shaft 37 at a portion extending toward the other side in the axial direction, that is, in a direction away from the rotating electric machine 20, relative to the second gear 32. The third gear 33 is integrally formed with the shaft 37. The second gear 32 and the third gear 33 are arranged between the bearing 53 and the bearing 54 in the axial direction.

The fourth gear 34 meshes with the third gear 33. The fourth gear 34 is set to have more teeth than the third gear 33 and constitutes a second speed reduction gear stage together with the third gear 33. The fourth gear 34 is provided on the shaft 38 and is arranged on the third axis AX3. The fourth gear 34 is integrally formed with the shaft 38. The shaft 38 extends along the rotating shaft 23. The shaft 38 is supported by a bearing 55 provided in the first case 11 and a bearing 56 provided in the third case 13. The bearing 55 and the bearing 56 are arranged at both ends with respect to the shaft 38.

The fifth gear 35 is connected at the downstream side of the fourth gear 34. The fifth gear 35 is provided on the shaft 38 and is arranged on the third axis AX3. The fifth gear 35 is provided on the shaft 38 at a portion extending toward one side in the axial direction, that is, in a direction approaching the rotating electric machine 20, relative to the fourth gear 34. Therefore, in the shaft 38, the motive force transmission direction is reversed to the opposite side in the axial direction with respect to the shaft 37. The fifth gear 35 is integrally formed with the shaft 38. The fourth gear 34 and the fifth gear 35 are arranged between the bearing 55 and the bearing 56 in the axial direction.

The sixth gear 36 meshes with the fifth gear 35. The sixth gear 36 is a final gear and is provided in the differential gear 40. The sixth gear 36 is arranged on the fourth axis AX4 together with the differential gear 40. The motive force from the rotating electric machine 20 is transmitted from the sixth gear 36 to the differential gear 40. Therefore, the differential gear 40 is connected at the downstream side of the sixth gear 36.

The sixth gear 36 overlaps with the first gear 31 in radial view. In other words, the first gear 31 has a portion that overlaps with the sixth gear 36 in the radial direction view. The portion overlaps with the sixth gear 36 in, for example, the radial direction view along a plane including the first axis AX1 and the fourth axis AX4. Overlapping in a predetermined direction view including the radial direction view and the axial direction view means overlapping in the predetermined direction (for example, the axial direction, the radial direction, the gravitational direction, the vehicle traveling direction such as the vehicle forward direction or the vehicle reverse direction, etc.), and means that a plurality of elements are arranged in the predetermined direction. Accordingly, when it is illustrated in the drawings that the plurality of elements are arranged in the predetermined direction, it may be considered that there is a sentence in the specification explaining that the plurality of elements overlap in the predetermined direction view.

The sixth gear 36 is set to have more teeth than the fifth gear 35 and constitutes a third speed reduction gear stage together with the fifth gear 35. Therefore, in the speed reduction mechanism 30, three-stage speed reduction is performed by the first gear 31 and the second gear 32, the third gear 33 and the fourth gear 34, and the fifth gear 35 and the sixth gear 36.

In the speed reduction mechanism 30, the third gear 33 and the fourth gear 34 are arranged in the direction farther from the stator 22 than the first gear 31, the second gear 32, the fifth gear 35, and the sixth gear 36. In other words, the four gears of the first gear 31, the second gear 32, the fifth gear 35, and the sixth gear 36 are brought closer to the stator 22 side, and the remaining two gears of the third gear 33 and the fourth gear 34 are brought to the side away from the stator 22.

The differential gear 40 is the differential gear mechanism and has a differential case 41 and a differential portion 42. The differential case 41 is supported by a bearing 57 provided in the first case 11 and a bearing 58 provided in the third case 13, and is rotated integrally with the sixth gear 36. The sixth gear 36 is coaxially fixed to an outer wall portion of the differential case 41, and the differential case 41 accommodates the differential portion 42. The differential portion 42 distributes and outputs the motive force that is input to the differential case 41 via the sixth gear 36 to respective drive wheels in a vehicle on the left and right sides.

The differential gear 40 projects out in the direction away from the stator 22 with respect to the sixth gear 36. The differential gear 40 projects out as described above such that the portion that projects out further in the axial direction from the sixth gear 36 forms a projecting portion. Therefore, in other words, with respect to the sixth gear 36, the differential gear 40 projects out further in the direction away from the stator 22 rather than in the direction approaching the stator 22 with respect to the sixth gear 36, and is arranged closer to the side away from the stator 22.

The bearing 57 and the bearing 58 are arranged on both sides in the axial direction with respect to the differential gear 40. As a result, with respect to each gear of the speed reduction mechanism 30 and the differential gear 40, the bearing 53, the bearing 55, and the bearing 57 are collectively arranged on the one side in the axial direction, and the bearing 54, the bearing 56, and the bearing 58 are collectively arranged on the other side in the axial direction.

A link shaft 61 is inserted into the differential gear 40 from the one side in the axial direction of the unit 1 and is spline-coupled. The link shaft 61 is a shaft that is interposed between the differential gear 40 and the drive wheel and is responsible for their connection, and the link shaft 61 is connected at the downstream side of the rotating electric machine 20. The rotating electric machine 20 is connected to the link shaft 61 via the differential gear 40.

The link shaft 61 is spline-coupled to a side gear of the differential portion 42 from one side in the axial direction, and a first drive shaft 62 is spline-coupled to the link shaft 61 from one side in the axial direction. Therefore, the link shaft 61 is, so to speak, an extension shaft of the first drive shaft 62 and corresponds to the drive shaft. The first drive shaft 62 may be connected directly to the differential gear 40 by being extended, in other words, the first drive shaft 62 may be directly connected to the differential gear 40 without the link shaft 61. In this case, the first drive shaft 62 corresponds to the link shaft.

A second drive shaft 63 is assembled to the differential portion 42 from the other side in the axial direction. The motive force from the rotating electric machine 20 is transmitted from the differential portion 42 to one of the drive wheels via the link shaft 61 and the first drive shaft 62, and to the other of the drive wheels via the second drive shaft 63. The first drive shaft 62 is supported by a bearing 59 provided in the second case 12.

The sixth gear 36 also serves as a part of the differential gear 40. In other words, the sixth gear 36 can also be grasped as one component of the differential gear 40. Even in this case, it can be grasped that the differential gear 40 is connected at the downstream side of the sixth gear 36 in such a manner that a part of the differential gear 40 including the differential portion 42 that outputs the motive force from the rotating electric machine 20 is connected at the downstream side of the sixth gear 36.

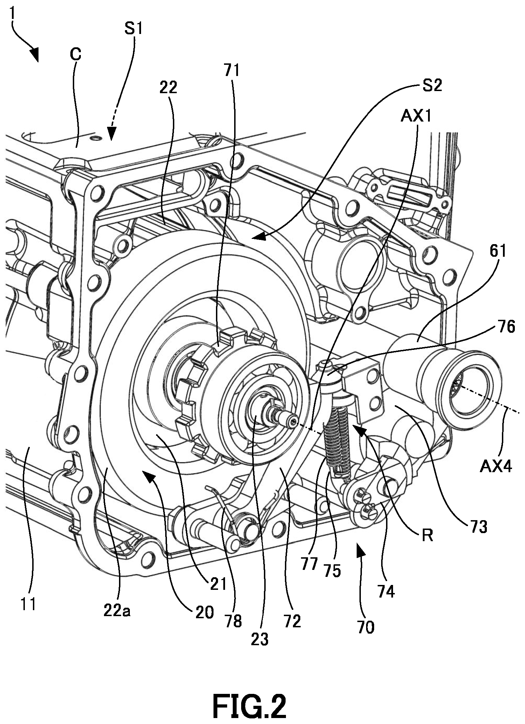

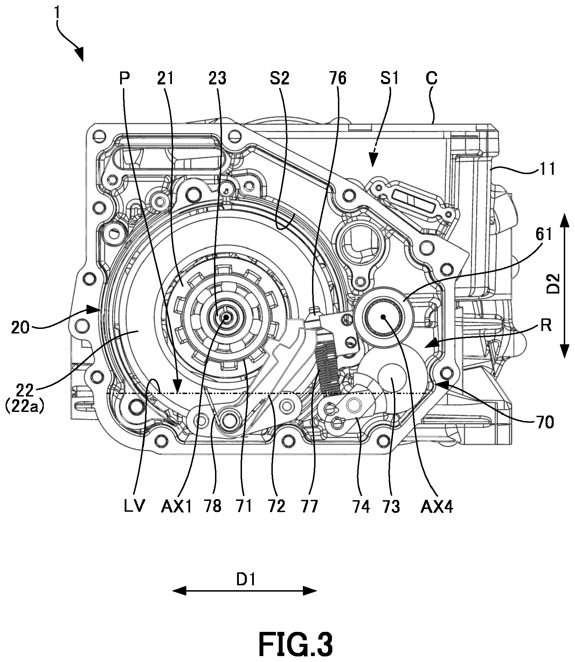

FIG. 2 is a perspective view of a main part of the unit 1. FIG. 3 is a front view of a main part of the unit 1. FIG. 3 shows a main part of the unit 1 as viewed along the axial direction of the link shaft 61. Note that the axial direction of the link shaft 61 corresponds to the axial direction of the unit 1.

As shown in FIGs. 2 and 3, the link shaft 61 is positioned on an outer circumference (outer periphery) of the rotating electric machine 20. Therefore, the rotating electric machine 20 and the link shaft 61 are not coaxial but are arranged on separate axes. The rotating electric machine 20 and the link shaft 61 are separately arranged on the first axis AX1 and the fourth axis AX4, which are two axes arranged so as to be parallel to each other.

The unit 1 further has a park lock mechanism 70. The park lock mechanism 70 is fixed to the second case 12 that is provided on the one end side (the one side) of the first case 11 in the axial direction, and the park lock mechanism 70 is provided in the first case 11 together with the second case 12. In FIG. 2, the park lock mechanism 70 is shown in a front view in the same arrangement as the state when it is fixed to the second case 12 in the unit 1.

The park lock mechanism 70 has the park gear 71 that is provided on the rotating shaft 23, a park pawl 72 that engages with the park gear 71, and a park actuator 73 that rotates the park pawl 72. The park actuator 73 has an actuator drive motor that generates the motive force in the park actuator 73, and is rotationally driven.

In the park lock mechanism 70, the motive force from the park actuator 73 is transmitted to the park pawl 72 via a link mechanism 74, a park rod 75, and a wedge 76. The link mechanism 74 connects the park actuator 73 and a rear end side of the park rod 75, and the park rod 75 is moved in accordance with the motive force input from the park actuator 73 via the link mechanism 74. The wedge 76 is attached to a tip end side of the park rod 75.

The wedge 76 is biased toward the park pawl 72 side by a wedge spring 77 provided on the park rod 75, and the park pawl 72 is biased toward the side away from the park gear 71 by a return spring 78. In accordance with the movement of the park rod 75, the wedge 76 swings the park pawl 72, and thereby, park lock and park lock release (engagement and disengagement between the park gear 71 and the park pawl 72) are achieved. In FIGs. 2 and 3, the park pawl 72 and the like are shown in both a park lock position and a park lock release position.

The park lock mechanism 70 is provided on the opposite side to the speed reduction mechanism 30 with the rotating electric machine 20 interposed therebetween in the axial direction. In other words, the rotating electric machine 20 is provided between the park lock mechanism 70 and the speed reduction mechanism 30. By providing the park lock mechanism 70 as described above, it is possible to provide the park lock mechanism 70 without considering interference with the speed reduction mechanism 30.

The stator 22 of the rotating electric machine 20 is provided on an outer circumference of the rotor 21, and coil ends 22a of the stator 22 are formed at both ends of the stator 22. The coil end 22a extends along the axial direction of the unit 1 to the vicinity of an opening on the one end side of the first case 11. In addition, the link shaft 61 has a portion provided inside the first case 11 and projects outward from the one end side of the first case 11.

Therefore, a region R like a step formed by the rotating electric machine 20 and the link shaft 61 is formed inside the first case 11. The region R is formed inside the first case 11 so as to be adjacent to the rotating electric machine 20 and the link shaft 61, and has a depth extending inward of the first case 11 along the axial direction from the opening on the one end side of the first case 11.

The region R includes a lower space of the link shaft 61 (a space directly below the link shaft 61), and the park actuator 73 has a portion arranged in the region R by being inserted into the region R from the opening on the one end side of the first case 11. The park actuator 73 is inserted into the region R within a range that reaches a position where an inverter accommodating chamber S1 is provided in the axial direction of the link shaft 61.

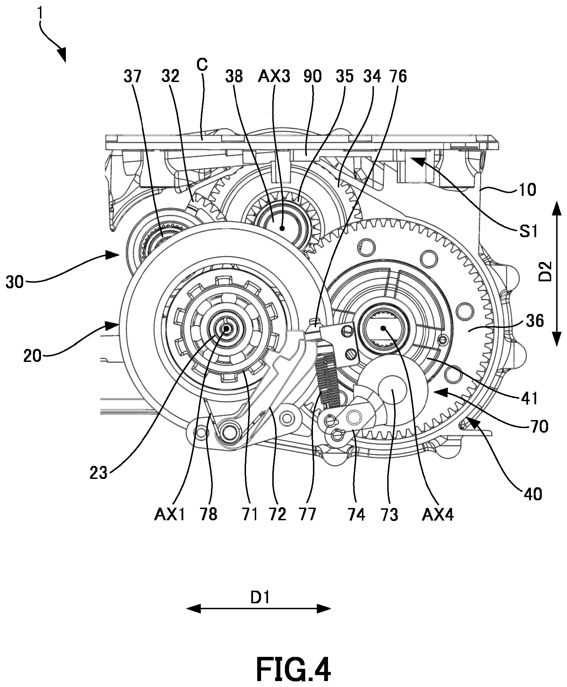

The inverter accommodating chamber S1 is formed in the first case 11. The inverter accommodating chamber S1 opens at an upper surface of the first case 11 and is covered by a cover C. Accordingly, the inverter accommodating chamber S1, which is indicated by an arrow whose tip end side is shown by a dashed line, is hidden under the cover C, and an inverter 90 (see FIG. 4) accommodated in the inverter accommodating chamber S1 is provided on the other side of the cover C.

A surrounding wall of the inverter accommodating chamber S1 connects to a mating surface around the opening formed on the upper surface of the first case 11, and the cover C is bolted to the mating surface. Therefore, the inverter accommodating chamber S1 extends substantially to the same extent as the cover C.

The link shaft 61 and the park actuator 73 have portions that overlap with the rotating electric machine 20 when viewed from a first orthogonal direction D1 (the left-right direction in FIG. 3) orthogonal to the axial direction of the link shaft 61. The first orthogonal direction D1 is the lateral direction of the first case 11 (the lateral direction of the housing 10) orthogonal to the axial direction of the link shaft 61. The first orthogonal direction D1 is orthogonal to the axial direction of the link shaft 61 along the upper surface of the first case 11 (the upper surface of the housing 10) on which the cover C is provided.

Furthermore, the park actuator 73 has a portion that overlaps with the link shaft 61 when viewed from the second orthogonal direction D2 (the vertical direction in FIG. 3) orthogonal to the axial direction of the link shaft 61 and the first orthogonal direction D1. The second orthogonal direction D2 is the vertical direction of the first case 11 (the vertical direction of the housing 10). The second orthogonal direction D2 is orthogonal to the upper surface of the first case 11 (the upper surface of the housing 10) on which the cover C is provided.

By configuring the unit 1 in this manner, the park actuator 73 is arranged in the region R having a step-like form formed by the rotating electric machine 20 and the link shaft 61. Therefore, it is possible to realize the park lock mechanism 70 that contributes to miniaturization of the unit 1, and thus, the overall size of the unit 1 can be made compact.

The housing 10 has the inverter accommodating chamber S1, which is indicated by an arrow whose tip end side is shown by a dashed line in FIGs. 2 and 3, and the inverter accommodating chamber S1 has a portion that overlaps with the link shaft 61 and the park actuator 73 when viewed from the second orthogonal direction D2.

With such a configuration, when viewed from a predetermined direction (the second orthogonal direction D2), the link shaft 61 and the park actuator 73 are arranged so as to be hidden at the position overlapping with the inverter accommodating chamber S1, and so, it is possible to make the entire unit 1 compact.

The link shaft 61 has a portion that is arranged so as to be sandwiched between the park actuator 73 and the inverter accommodating chamber S1. The reason is as follows.

Here, the park actuator 73 can also be arranged between the inverter accommodating chamber S1 and the link shaft 61. However, in this case, since an upper space of the link shaft 61 is narrow (see FIG. 2), when viewed from the first orthogonal direction D1, the park actuator 73 is arranged in the direction in which a distance between the axis of the rotating electric machine 20 and the axis of the link shaft 61 (the distance along the vertical direction in FIG. 3) is increased.

On the other hand, the lower space of the link shaft 61 included in the region R is difficult to be utilized for some purpose in terms of arrangement in the entire unit 1, partly because an oil reservoir P, which will be described later, is formed, and it is easy to secure an installation space for the park actuator 73 without largely shifting the arrangement of the link shaft 61.

Therefore, in a case in which the park actuator 73 is arranged in the lower space of the link shaft 61, compared with a case in which the park actuator 73 is arranged in the upper space of the link shaft 61, it is possible to reduce the distance between the axis of the rotating electric machine 20 and the axis of the link shaft 61 when viewed from the first orthogonal direction D1.

By reducing the distance between the axis of the rotating electric machine 20 and the axis of the link shaft 61, it is possible to suppress a top portion or a bottom portion of the rotating electric machine 20 from projecting out significantly in the vehicle height direction from the vehicle with respect to the center of the drive wheel. Therefore, it is possible to improve a vehicle mountability of the unit 1.

The housing 10 further has a motor accommodating chamber S2 that accommodates the rotating electric machine 20. The motor accommodating chamber S2 is formed in the first case 11, and the inverter accommodating chamber S1 and the motor accommodating chamber S2 are integrally formed in the first case 11.

With such a configuration, compared with a case in which the motor accommodating chamber S2 is formed in a separate housing with respect to the housing 10 having the inverter accommodating chamber S1, the entire unit 1 can be made compact.

In other words, although the housing 10 may be configured such that the inverter accommodating chamber S1 and the motor accommodating chamber S2 are separately formed, i.e. in a housing having the motor accommodating chamber S2 (the first housing) and a housing having the inverter accommodating chamber S1 (the second housing), compared with such a case, the entire unit 1 can be made compact.

As shown in FIG. 3, the unit 1 further has an oil reservoir P in which oil used for lubrication and cooling is stored. The oil reservoir P is formed in a lower space inside the housing 10, and the oil reservoirs P formed in the first case 11, the second case 12, and the third case 13 communicate with each other. Therefore, an oil level LV of the oil reservoir P is a common oil surface height across the oil reservoirs P in the first case 11, the second case 12, and the third case 13 in a steady circulation state.

The steady circulation state is a state in which oil circulation is steady, and for example, when oil circulation is performed using a pump, it is a state in which the oil level LV is stable during pump operation. The oil circulation may be performed by scraping up of oil by a rotating member such as a gear, etc. in the housing 10. In this case, the steady circulation state is defined as a state in which the oil level LV is stabilized during the rotation of the rotating member.

The oil level LV is set to a height at which the stator 22 is immersed in the oil and the oil does not enter a gap (an air gap) between the rotor 21 and the stator 22 in the steady circulation state. This is because, while a rotational resistance of the rotating electric machine 20 is increased sharply when the oil enters the air gap, it is desired to cool the stator 22. From this reason, by setting the oil level LV as described above, the oil level LV is set such that the oil comes into contact with the coil ends 22a of the stator 22.

The park actuator 73 is positioned below the link shaft 61 (in the lower space of the link shaft 61 included in the region R), and at least a part thereof is positioned below the oil level LV. In other words, at least a part of the park actuator 73 is immersed in the oil reservoir P and is submerged in the oil. With such a configuration, it is possible to cool an actuator drive motor (a drive motor of the actuator) that the park actuator 73 has and that tends to generate heat.

FIG. 4 is a diagram showing another main part of the unit 1. In FIG. 4, the rotating electric machine 20, the speed reduction mechanism 30, and the park lock mechanism 70 are shown in a front view (that is, the front view as viewed in the same direction as FIG. 3) from the second case 12 side together with the housing 10 and the cover C. In FIG. 4, the park lock mechanism 70 is shown in the same arrangement as the state when it is fixed to the second case 12 in the unit 1. Note that illustration of the link shaft 61 is omitted in FIG. 4.

The sixth gear 36 corresponds to a ring gear, and has a portion that overlaps with the rotating electric machine 20 when viewed from the axial direction of the unit 1 (from the axial direction of the link shaft 61). In addition, the sixth gear 36 has a portion that does not overlap with the rotating electric machine 20 and overlaps with the park actuator 73 when viewed from the axial direction of the unit 1.

With such a configuration, while achieving the miniaturization of the unit 1 by causing the sixth gear 36 to overlap with the rotating electric machine 20, by also providing a portion that does not overlap with the rotating electric machine 20, it is possible to secure a space for arranging the park actuator 73, which can contribute to miniaturization of the entire unit 1.

In the unit 1, furthermore, when viewed from the axial direction of the unit 1, the differential case 41 has a portion that overlaps with the rotating electric machine 20 and also has a portion that does not overlap with the rotating electric machine 20 and overlaps with the park actuator 73, and so, further miniaturization of the entire unit 1 is achieved.

The differential gear 40 may be configured to have a planetary gear mechanism as the speed reduction mechanism. In this case, by employing a configuration in which, when viewed from the axial direction of the unit 1, a ring gear of the planetary gear mechanism accommodated in the differential case 41 has a portion that overlaps with the rotating electric machine 20 and also has a portion that does not overlap with the rotating electric machine 20 and overlaps with the park actuator 73, it is possible to further miniaturize the entire unit 1.

Next, main operational advantages of the unit 1 will be described.
(1) The unit 1 includes: the rotating electric machine 20; the link shaft 61 connected at the downstream side of the rotating electric machine 20; and the park lock mechanism 70 having the park gear 71 provided on the rotating shaft 23, the rotating shaft 23 being configured to rotate integrally with the rotor 21 of the rotating electric machine 20, the park pawl 72 engaged with the park gear 71, and the park actuator 73 configured to rotate the park pawl 72. The link shaft 61 is positioned on the outer circumference of the rotating electric machine 20. When viewed from the first orthogonal direction D1 orthogonal to the axial direction of the link shaft 61, the link shaft 61 and the park actuator 73 each have a portion overlapping with the rotating electric machine 20. When viewed from the second orthogonal direction D2 orthogonal to the axial direction and the first orthogonal direction D1, the park actuator 73 has a portion overlapping with the link shaft 61.

According to such a configuration, in the unit 1 in which the rotating electric machine 20 and the link shaft 61 are not coaxial but are arranged on separate axes, it is possible to realize the park lock mechanism 70 that contributes to miniaturization of the unit 1. In other words, since the park actuator 73 is arranged in the region R like a step formed by the rotating electric machine 20 and the link shaft 61, the overall size of the unit 1 can be made compact.

(2) The unit 1 has the housing 10 having the inverter accommodating chamber S1 configured to accommodate the inverter 90. When viewed from the second orthogonal direction D2, the inverter accommodating chamber S1 has a portion that overlaps with the link shaft 61 and the park actuator 73.

According to such a configuration, when viewed from a predetermined direction (the second orthogonal direction D2), the link shaft 61 and the park actuator 73 are arranged so as to be hidden at the position overlapping with the inverter accommodating chamber S1, and so, it is possible to make the entire unit 1 compact.

(3) The link shaft 61 has a portion arranged so as to be sandwiched between the park actuator 73 and the inverter accommodating chamber S1.

According to such a configuration, when viewed from the first orthogonal direction D1, the distance between the axis of the rotating electric machine 20 and the axis of the link shaft 61 can be reduced. By reducing the distance between the axis of the rotating electric machine 20 and the axis of the link shaft 61, it is possible to suppress the top portion or the bottom portion of the rotating electric machine 20 from projecting out significantly in the vehicle height direction from the vehicle with respect to the center of the drive wheel. Therefore, it is possible to improve the vehicle mountability of the unit 1.

(4) The housing 10 has the motor accommodating chamber S2 configured to accommodate the rotating electric machine 20.

According to such a configuration, by integrally forming the inverter accommodating chamber S1 and the motor accommodating chamber S2 in the housing 10, the entire unit 1 can be made compact.

(5) The park actuator 73 is positioned below the link shaft 61. At least a part of the park actuator 73 is submerged in oil.

According to such a configuration, by arranging the park actuator 73 below the link shaft 61 so as to be submerged in the oil, it is possible to cool the actuator drive motor that the park actuator 73 has and that tends to generate heat.

(6) The rotating electric machine 20 is connected to the link shaft 61 via the differential gear 40. The differential gear 40 has the sixth gear 36. When viewed from the axial direction of the link shaft 61, the sixth gear 36 has a portion overlapping with the rotating electric machine 20. When viewed from the axial direction of the link shaft 61, the sixth gear 36 has a portion not overlapping with the rotating electric machine 20 and overlapping with the park actuator 73.

According to such a configuration, while achieving the miniaturization of the unit 1 by causing the sixth gear 36 to overlap with the rotating electric machine 20, by also providing a portion that does not overlap with the rotating electric machine 20, it is possible to secure a space for arranging the park actuator 73, which can contribute to miniaturization of the entire unit 1.

Although the embodiment of the present invention has been described in the above, the above-mentioned embodiments merely illustrate a part of application examples of the present invention, and the technical scope of the present invention is not intended to be limited to the specific configurations of the above-described embodiment.

### DESCRIPTION OF REFERENCE SIGNS

1: unit
20: rotating electric machine (motor)
36: sixth gear (ring gear)
40: differential gear
63: link shaft
70: park lock mechanism
71: park gear
72: park pawl
73: park actuator
90: inverter
D1: first orthogonal direction
D2: second orthogonal direction
LV: oil level
P: oil reservoir
S1: inverter accommodating chamber
S2: motor accommodating chamber

## Claims

1. A unit comprising:
a motor;
a link shaft connected at a downstream side of the motor; and
a park lock mechanism having a park gear provided on a shaft, the shaft being configured to rotate integrally with a rotor of the motor, a park pawl engaged with the park gear, and a park actuator configured to rotate the park pawl, wherein
the link shaft is positioned on an outer circumference of the motor,
when viewed from a first orthogonal direction orthogonal to an axial direction of the link shaft, the link shaft and the park actuator each have a portion overlapping with the motor, and
when viewed from a second orthogonal direction orthogonal to the axial direction and the first orthogonal direction, the park actuator has a portion overlapping with the link shaft.

2. The unit according to claim 1, comprising
a housing having an inverter accommodating chamber configured to accommodate an inverter, wherein
when viewed from the second orthogonal direction, the inverter accommodating chamber has a portion overlapping with the link shaft and the park actuator.

3. The unit according to claim 2, wherein
the link shaft has a portion arranged so as to be sandwiched between the park actuator and the inverter accommodating chamber.

4. The unit according to claim 2, wherein
the housing has a motor accommodating chamber configured to accommodate the motor.

5. The unit according to claim 1, wherein
the park actuator is positioned below the link shaft, and
at least a part of the park actuator is submerged in oil.

6. The unit according to any one of claims 1 to 5, wherein
the motor is connected to the link shaft via a differential gear,
the differential gear has a ring gear,
when viewed from the axial direction, the ring gear has a portion overlapping with the motor, and
when viewed from the axial direction, the ring gear has a portion not overlapping with the motor and overlapping with the park actuator.
